## Europäisches Patentamt
## European Patent Office
## Office européen des brevets

(19)

(11) Veröffentlichungsnummer: **0 035 605**
**B1**

(12)

# EUROPÄISCHE PATENTSCHRIFT

(45) Veröffentlichungstag der Patentschrift:
**04.09.85**

(51) Int. Cl.⁴: **F 16 K 47/02**

(21) Anmeldenummer: **80200225.3**

(22) Anmeldetag: **10.03.80**

(54) **Absperrorgan für gasförmige Medien mit einer Einrichtung zur Dämpfung selbsterregter akustischer Schwingungen in Kavitäten.**

(43) Veröffentlichungstag der Anmeldung:
**16.09.81 Patentblatt 81/37**

(45) Bekanntmachung des Hinweises auf die Patenterteilung:
**04.09.85 Patentblatt 85/36**

(84) Benannte Vertragsstaaten:
**CH DE FR SE**

(56) Entgegenhaltungen:
**EP - A - 0 035 073**
**DE - A - 2 224 269**
**DE - A - 2 439 225**
**DE - A - 2 509 376**
**DE - B - 2 431 322**
**DE - C - 1 259 154**
**GB - A - 1 016 020**
**US - A - 3 695 290**

(73) Patentinhaber: **BBC Aktiengesellschaft Brown, Boveri & Cie., Haselstrasse, CH-5401 Baden (CH)**

(72) Erfinder: **Keller, Jakob, Dr., Zelgmattstrasse 4, CH-8956 Killwangen (CH)**

# Beschreibung

Die vorliegende Erfindung betrifft ein Absperrorgan für gasförmige Medien mit einer Einrichtung zur Dämpfung selbsterregter akustischer Schwingungen in Kavitäten nach dem Oberbegriff des Patentanspruchs 1.

In Absperrorganen treten bei hohen Strömungsgeschwindigkeiten, durch verschiedene Ursachen bedingt, akustische Schwingungen auf, die sich sehr unangenehm als Lärm, aber auch als im Laufe der Zeit materialzerstörende Vibrationen auswirken. Eine der diesen Erscheinungen zugrundeliegenden Ursachen besteht in einer periodischen Ablösung der Strömung und Wanderungen der Ablösestelle im Diffusor stromabwärts des vom Ventilsitzring und dem Ventilschliesskörper begrenzten Drosselspaltes. Besonders an konvexen Wandteilen des Diffusors treten als Folge von Druckstörungen solche Diffusorschwingungen in unangenehmster Form auf, so dass es mancherlei Vorschläge zu deren Verhütung oder zumindest Dämpfung gab. Die brauchbarsten dieser Vorschläge sehen vor, dem schwingungsgefährdeten Bereich durch eine Sekundärströmung Energie zuzuführen, und zwar über Bohrungen oder Kanäle, die den erwähnten Bereich mit einem Raum höheren Druckes verbinden. Vorzugsweise benutzt man dafür einen stromabwärts des Diffusors liegenden Teil der Abströmleitung, in dem der Druckrückgewinn zur Herstellung der erwähnten Sekundärströmung ausreicht.

Vorschläge dieser Art zur Lärmreduktion bei Absperrorganen sind bekannt aus der EP-A-0 035 073 (veröffentlicht: 09. 09. 1981), der GB-A-1 016 020, der DE-C-1 259 154 und der US-A-3 695 290, bei denen in prinzipiell gleicher Weise der Hauptströmung aus einem Raum höheren Druckes, vorzugsweise einem den Hauptströmungskanal umgebenden Ringraum, Strömungsenergie in die Grenzschicht zugeführt wird, um die Wirbelbildung in der Grenzschicht und die damit verbundene Geräuschentwicklung zu vermindern.

Eine weitere Quelle solcher akustischen Schwingungen bei hohen Strömungsgeschwindigkeiten in Absperrorganen stellen Kavitäten mit sich quer zur Strömungsrichtung des Betriebsmediums erstreckenden Wandteilen dar, bei denen der aus einer düsenartigen Einschnürung nach dem Drosselspalt austretende Strahl des Betriebsmediums einseitig an einer Wand anliegt. Die Amplituden der dabei auftretenden akustischen Schwingungen reagieren sehr empfindlich auf die Stärke der Massenflussschwingung bzw. der Staupunktsschwingung in der Aufprallzone der Strömung am Ausgang der Kavität. Je stärker die Staupunktsschwingung auf die Druckschwingung in der Aufprallzone reagiert, umso stärker wird dabei die Schwingung in der Kavität gedämpft.

Die in den obenerwähnten Druckschriften erwähnten Massnahmen zur Geräuschdämpfung bei Absperrorganen sind für die Dämpfung derartiger Kavitätsschwingungen bei Absperrorganen und sonstigen, von gasförmigen Medien mit hoher Geschwindigkeit durchströmten Maschinenteilen nicht geeignet.

Da solche Kavitätsschwingungen nicht nur unangenehmen Betriebslärm verursachen, sondern, wie erwähnt, auch mechanische Beschädigungen oder gar Zerstörungen von bewegten Teilen, wie Spindeln und Spindelführungen, hervorrufen können, stellt sich die im Patentanspruch 1 definierte Erfindung die Aufgabe, die Dämpfung solcher Kavitätsschwingungen, deren Mechanismus sich von dem der eingangs erwähnten Diffusorschwingungen infolge Schwingungen der Ablösestelle unterscheidet, künstlich derart zu verstärken, dass die erwähnten unangenehmen und schädlichen Wirkungen vermieden oder zumindest auf ein erträgliches Mass reduziert werden.

Nachfolgend wird die Erfindung unter Bezugnahme auf in der Zeichnung dargestellte Ausführungsbeispiele näher erläutert.

In der Zeichnung stellen dar:

Fig. 1 ein kombiniertes Schnellschluss- und Regelventil nach der Erfindung, und die

Fig. 2 und 3 Beispiele für Formen von Kavitäten.

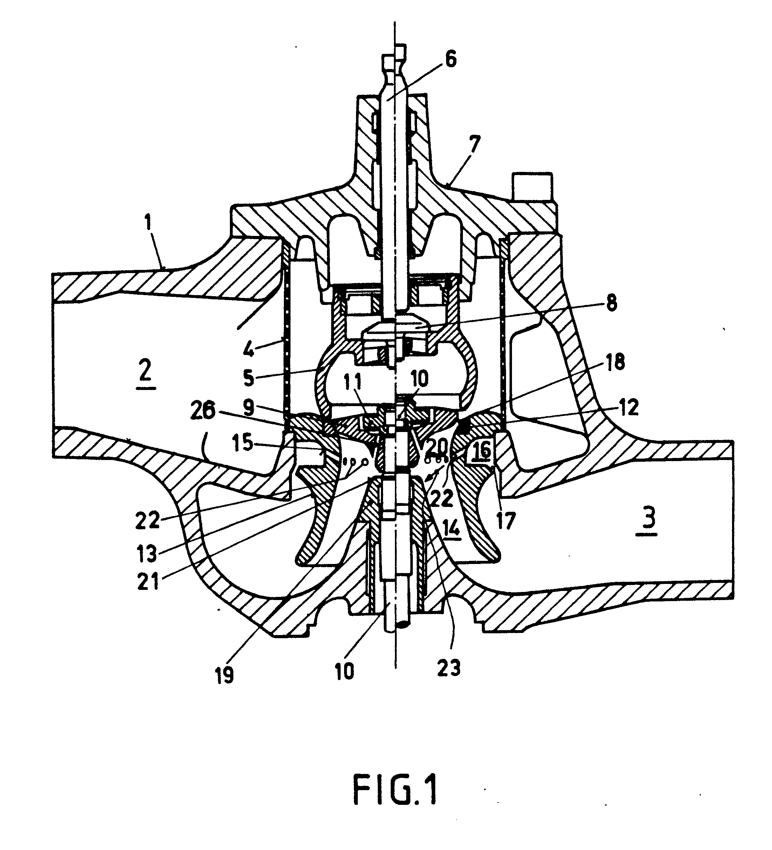

Fig. 1 stellt ein kombiniertes Dampfschnellschluss- und -regelventil dar. Das Ventilgehäuse 1 weist einen Einlasskanal 2 und einen Auslasskanal 3 auf. In Strömungsrichtung nach dem Einlasskanal 2 und einem Dampfsieb 4 befindet sich eine Regelglocke 5, die ebenso wie ihre Spindel 6 in einem Flanschgehäuse 7 geführt ist. Am unteren Ende der Spindel 6 sitzt ein Vorhubventil 8, das in bekannter Weise zur Erleichterung des Öffnungsvorganges dient.

Koaxial innerhalb der Regelglocke 5 befindet sich ein Schnellschlussventilkörper 9, dessen Spindel 10 im unteren Teil des Gehäuses gelagert ist. Diese Spindel 10 trägt an ihrem oberen Ende ein Vorhubventil 11 zur Erleichterung des Öffnungsvorganges.

Für die Sitzflächen der beiden Ventilkörper 5 und 9 ist ein gemeinsamer Ventilsitzring 12 vorhanden, der in einen Diffusorkörper 13 eingelassen ist. Dieser besitzt an seinem äusseren Umfang im Bereich des engsten Querschnitts des Diffusorkanals 14 eine Ringnut 15, die mit der benachbarten Bohrungswand des Gehäuses 1 einen Ringraum 16 bildet. Im übrigen ist die Aussenkontur des Diffusorkörpers 13 so geformt, dass der Raum 16 über einen ringförmigen Schlitz 17 mit dem Auslasskanal 3 in Verbindung steht, so dass sich zum Raum 16 hinein eine Strömung einstellen kann, da der Druck im Auslasskanal 3 im Betrieb, d.h., bei geöffnetem, durchströmtem Ventil, höher ist als der Druck an der engsten Stelle des Diffusorkanals 14 im Bereich der vertikalen Erstreckung des Ringraumes 16.

Die rechte Bildhälfte der Fig. 1 zeigt die Ventilkörper 5 und 9 in teilweise geöffneter Stellung, in der linken Bildhälfte sind die beiden Ventilkörper in ihrer geschlossenen Stellung gezeichnet.

Im abgehobenen Zustand begrenzen die beiden Ventilkörper 5 und 9 einerseits und der Ventilsitzring 12 andererseits einen Drosselspalt 18, durch den der Dampf in den Diffusorkanal 14 einströmen kann. Infolge der besonderen Geometrie des Diffusorkanals im und unterhalb des Drosselspaltes 18 wird sich der Dampfstrahl im allgemeinen an die äussere Begrenzung des Diffusorkanals anlegen und am unteren Ende der Kavität aufprallen, beispielsweise auf die mit 21 bezeichnete Aufprallzone am oberen Rand der Spindelführung 19. Die Kavität wird von der oberen Hälfte der äusseren Kontur des Diffusorkanals und der Aussenkontur des Schnellschlussventilkörpers 9 sowie vom oberen Teil der Spindelführung 19 des Ventilkörpers 9 begrenzt.

Um nun die in der Einleitung erwähnten, schädlichen Kavitätsschwingungen zu dämpfen, sind im Diffusorkörper 13 über den Umfang gleichmässig verteilte Dämpferbohrungen 22 vorgesehen, die mit der Achse der Spindel 10, in Strömungsrichtung des Dampfes gesehen, einen spitzen Winkel einschliessen und den Ringraum 16 mit dem Diffusorkanal 14 im Bereich der Aufprallzone 21 des Dampfstrahles leitend verbinden. Innerhalb dieser Aufprallzone liegt auch die Staulinie 27, worunter die Gesamtheit der Staupunkte der senkrecht auf die Aufprallzone auftreffenden Mediumteilchen zu verstehen ist.

Aus dem Ringraum 16, der über den ringförmigen Schlitz 17 mit dem Auslasskanal 3 in Verbindung steht, stellt sich eine durch den Pfeil 23 versinnbildlichte Dämpferströmung in die erwähnte Aufprallzone hinein ein, da im Betrieb der Druck im Auslasskanal 3 höher ist als der mittlere Druck in der Kavität 20 im Bereich der Aufprallzone 21. Da die Bohrungen 22 im Bereich der Aufprallzone 21 derart gerichtet in den Strömungskanal 14 einmünden, dass die Verlängerung ihrer Achsen die Aufprallzone 21 stromabwärts etwas unterhalb der Staulinie 27 trifft, wird eine Blockierung des Austrittsquerschnittes der Kavität 20 bewirkt, welche zu einem erhöhten Massenfluss im Bereich der Aufprallzone in die Kavität hinein führt und damit die erfindungsgemäss angestrebte Dämpfung der Kavitätsschwingung erzeugt. Dabei soll aber der Druck im Ringraum 16 möglichst nur wenig grösser sein als der mittlere Druck in der Kavität 20, da bei nur wenig erhöhtem Druck der Massenstrom durch die Bohrungen 22 bereits auf quadratisch kleine Druckschwingungen in der Aufprallzone reagiert und die Schwingung der Staulinie in der Aufprallzone deshalb besonders intensiv verstärkt wird.

Anstatt mit dem Ringraum 16 kann die Kavität mit irgendeinem anderen Druckreservoir in Verbindung stehen, in dem der Druck wie oben erwähnt etwas grösser ist als in der Kavität.

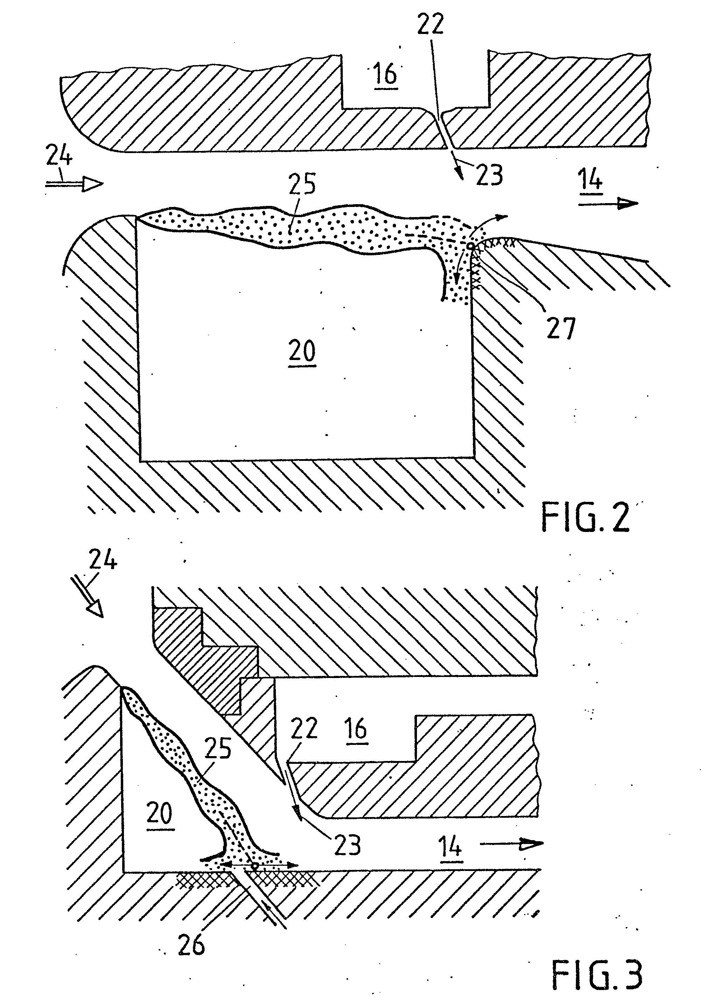

In der Fig. 2 und 3 sind schematisch Formen von Kavitäten dargestellt, wie sie ebenfalls bei Ventilen oder sonstigen Absperrorganen, aber auch bei anderen gas- oder dampfleitenden Maschinenteilen vorkommen. In diesen Figuren sind Elemente gleicher Funktion mit den gleichen Bezugszahlen versehen wie in Fig. 1.

Anhand der Kavitäten nach den Fig. 2 und 3 sei im folgenden der Mechanismus der Dämpfung der Kavitätsschwingung nochmals kurz skizziert. Der aus der Drosselstelle kommende, durch den Pfeil versinnbildlichte Strahl 24 tritt zunächst kompakt in den Diffusorkanal 14 ein. Beim Vorbeiströmen an der Kavität wird ihm in der punktiert hervorgehobenen Scherschicht 25 Energie entzogen. Ein Teil dieses Energieverlustes rührt von der Impulsabgabe an Moleküle des Mediums in der Scherschicht 25 her, die vom Strahl 24 aus der Kavität 20 mitgerissen werden, der Rest wird in Schallschwingungen und Wärmeenergie umgewandelt.

Eine spontane Dämpfung dieser Schwingungen ergibt sich durch eine periodische Zufuhr von Medium im Bereich der Aufprallzone in die Kavität, wobei die stärkste Zufuhr jeweils in der Phase erfolgt, während der im Bereich der Aufprallzone minimaler Druck herrscht. Das derart der Kavität zugeführte Medium ersetzt laufend das vom Strahl aus der Kavität mitgerissene Medium. Hierbei ergibt sich ein Gleichgewicht des mittleren Druckes in der Kavität. Durch eine künstliche Erhöhung der Zufuhr von Medium in die Kavität kann der oben erläuterte Dämpfungsmechanismus wirksam verstärkt werden.

Je nach Anordnung der Dämpferbohrungen 22 für das Überströmen des Mediums aus dem Raum 16 wird diese Strömung den Strahl 24 hemmen, so dass ein Teil desselben wie aus den Fig. 2 und 3 ersichtlich in die Kavität 20 abgedrängt wird, oder es wird aus den Dämpferbohrungen das durch sie zugeführte Medium mit dem gleichen Effekt direkt in die Kavität eingeführt und durch die so bewirkte zusätzliche Zufuhr von Medium die Schwingung in der Kavität gedämpft. Der letztere Fall ergibt sich bei einer in Fig. 3 dargestellten Anordnung von Dämpferbohrungen 26 an der inneren Begrenzung der Kavität. In diesem Falle liegt die Einströmstelle stromaufwärts der Staulinie 27, während sie bei den Kanälen 23 stromabwärts der Staulinie 27 liegt.

Aus Fig. 3 geht hervor, dass die Dämpferbohrungen, bei denen es sich im allgemeinen um irgendwie gestaltete Kanäle handeln kann, auf Absperrorgane angewandt sowohl in der äusseren Begrenzungswand des Diffusorkörpers eines Absperrorganes als auch im zentralen Teil des Diffusorkörpers vorgesehen sein können. Im letzteren Falle könnte z.B. unter anderem die zur Entlastung der Ventilöffnung dienende Strömung durch das Vorhubventil zur Speisung der Dämpferbohrungen verwendet werden.

Fig. 1 zeigt solche Dämpferbohrungen 26 in der Nabe des Schnellschlussventilkörpers 9, die über den Einströmkanal des Vorhubventils 11 bei geöffneter Regelglocke 5 mit dem Einlasskanal 2 als Raum höheren Druckes kommunizieren. Die Drosselung dieser Dämpferbohrungen ist dabei so abzustimmen, dass, wie schon gesagt, der Druck der Dämpferströmung nur etwas über dem Druck in der Kavität 20 liegt. Bei einem gegebenen Absperrorgan oder einem sonstigen Bauteil mit einer akustische Schwingungen verursachenden Kavität können die Dämpferbohrungen 22 und 26 bzw. Dämpferkanäle jeweils allein oder gemeinsam vorgesehen sein.

Bezeichnungsliste

1  Ventilgehäuse
2  Einlasskanal
3  Auslasskanal
4  Dampfsieb
5  Regelglocke
6  Spindel
7  Flanschgehäuse
8  Vorhubventil
9  Schnellschlussventilkörper
10  Spindel
11  Vorhubventil
12  Ventilsitzring
13  Diffusorkörper
14  Diffusorkanal
15  Ringnut
16  Ringraum
17  Ringförmiger Schlitz
18  Drosselspalt
19  Spindelführung
20  Kavität
21  Aufprallzone des Dampfstrahles
22  Dämpferbohrungen
23  Dämpferströmung
24  Strahl des Mediums
25  Sperrschicht
26  Dämpferbohrungen
27  Staulinie

**Patentansprüche**

1. Absperrorgan für gasförmige Medien mit einer Einrichtung zur Dämpfung selbsterregter akustischer Schwingungen, die dadurch entstehen, dass der Strömungskanal (14) des Mediums stromabwärts von dessen durch einen Ventilsitzring (12) und einen Ventilschliesskörper (9) begrenzten Drosselspalt (18) eine Kavität (20) aufweist, deren Begrenzung zum Teil von quer zur Strömungsrichtung orientierten Wandteilen gebildet wird, welche Wandteile eine eine Staulinie (27) enthaltende Aufprallzone (21) für einen Teil des durchströmenden Mediums bilden, wobei ein Raum (2; 16), in dem beim durchströmten Absperrorgan ein höherer Druck herrscht als im Strömungskanal (14), durch Kanäle (22; 26), die in mindestens einer der Begrenzungswände des Strömungskanals (14) vorgesehen sind, mit dem Strömungskanal (14) leitend verbunden ist, dadurch gekennzeichnet, dass die genannten Kanäle (22; 26) so angeordnet sind, dass die aus dem genannten Raum (2; 16) höheren Druckes durch diese Kanäle (22; 26) in den Strömungskanal (14) eintretenden Strömungen neben der Staulinie (27) der Hauptströmung des Mediums auf die Aufprallzone treffen, derart, dass der genannten Kavität durch diese Strömungen Energie zugeführt und dadurch die Druckschwingungen in der Kavität gedämpft werden.

2. Absperrorgan nach Anspruch 1, dadurch gekennzeichnet, dass die Kanäle (22) zur Dämpfung der akustischen Schwingungen in der Aussenwand des Strömungskanals (14) vorgesehen und so angeordnet sind, dass ihre Strömungen stromabwärts und neben der Staulinie (27) der Hauptströmung auf die Aufprallzone (21) auftreffen.

3. Absperrorgan nach Anspruch 2, dadurch gekennzeichnet, dass die Kanäle (26) zur Dämpfung der akustischen Schwingungen im Ventilschliesskörper (11) vorgesehen und so angeordnet sind, dass sie stromaufwärts und neben der Staulinie in die Kavität hineinmünden.

**Claims**

1. Shut-off element for gaseous media with a device for damping self-excited acoustic vibrations which occur because the flow duct (14) of the medium has a cavity (20) downstream of its throttle gap (18) which is bounded by a valve seating ring (12) and a valve closure body (9), the boundaries of which cavity are formed in part by wall parts directed transverse to the direction of flow, which wall parts from an impingement zone (21) for a part of the flowing medium, the impingement zone (21) containing a banking curve (27), a space (2; 16), in which there is a higher pressure than in the flow duct (14) when flow is occurring through the shut-off element, being connected conductively to the flow duct (14) by means of ducts (22; 26) which are provided in at least one of the boundary walls of the flow duct (14), characterised in that the ducts (22; 26) mentioned are so arranged that the flows entering through these ducts (22; 26) into the flow duct (14) from the higher pressure space (2; 16) mentioned meet on the impingement zone near the banking curve (27) of the main flow of the medium, in such a way that energy is supplied by these flows to the cavity mentioned and the pressure vibrations in the cavity are damped by this means.

2. Shut-off element according to Claim 1, characterised in that the ducts (22) for damping the acoustic vibrations are provided in the external wall of the flow duct (14) and are so arranged that their flows impinge onto the impingement zone (21) downstream and near the banking curve (27) of the main flow.

3. Shut-off element according to Claim 2, characterised in that the ducts (26) for damping the acoustic vibrations are provided in the valve closure body (11) and are so arranged that they emerge into the cavity upstream and near the banking curve.

**Revendications**

1. Organe d'arrêt pour milieux gazeux, pourvu d'un dispositif pour amortir des vibrations acoustiques auto-amorcées dans des cavités, qui se produisent parce que le canal (14) d'écoulement du milieu présente, en aval d'une fente d'étranglement (18) de ce canal limitée par un siège rapporté de soupape (12) et un corps (9) de fermeture de soupape, une cavité (20) délimitée en partie par des parois orientées transversalement par rapports à la direction de l'écoulement, parois qui forment, pour une partie du milieu en circulation, une zone d'impact (21) comprenant une ligne de retenue (27), une chambre (2; 16), dans laquelle règne, lorsque l'organe d'arrêt est traversé par le milieu gazeux, une pression supérieure à la pression régnant dans le canal d'écoulement (14), étant mise en communication conductrice avec le canal d'écoulement (14) par l'intermédiaire de canaux (22; 26) qui sont prévus dans au moins une des parois délimitant le canal d'écoulement (14), caractérisé en ce que les canaux précités (22; 26) sont disposés de telle façon que les courants provenant de la dite chambre (2; 16) à haute pression et pénétrant dans le canal d'écoulement (14) par les dits canaux (22; 26) frappent la zone d'impact à côté de la ligne de retenue (27) du courant principal de milieu gazeux, d'une manière telle que de l'énergie est fournie à la dite cavité par ces courants et que, par ce moyen, les oscillations de la pression dans la cavité sont amorties.

2. Organe d'arrêt suivant la revendication 1, caractérisé en ce que les canaux (22) pour l'amortissement des vibrations acoustiques sont prévus dans la paroi extérieure du canal d'écoulement (14) et sont agencés de telle façon que leurs courants frappent la zone d'impact (21) en aval et à côté de la ligne de retenue (27) du courant principal.

3. Organe d'arrêt suivant la revendication 2, caractérisé en ce que les canaux (26) pour l'amortissement des vibrations acoustiques sont prévus dans le corps (11) de fermeture de la soupape et sont agencés de telle façon qu'ils débouchent dans la cavité en amont et à côté de la ligne de retenue.

FIG.1

FIG.2

FIG.3